# EUROPÄISCHE PATENTSCHRIFT

(11) **EP 2 646 772 B1**
(45) Veröffentlichungstag und Bekanntmachung des Hinweises auf die Patenterteilung: **11.03.2015**
(21) Anmeldenummer: 11810631.9
(22) Anmeldetag: 14.11.2011
(51) Int. Cl.: G01C 15/00, G01C 15/10

(54) **LASERNIVELLIERGERÄT**
LASER LEVELLING DEVICE
DISPOSITIF DE NIVELLEMENT LASER

(30) Priorität: 03.12.2010 RU 2010149879
(43) Veröffentlichungstag der Anmeldung: 09.10.2013
(73) Patentinhaber: Gulunov, Alexey V., 454084 Chelyabinsk (RU)
(72) Erfinder: Gulunov, Alexey V., 454084 Chelyabinsk (RU)
(74) Vertreter: Jeck, Anton
(86) Internationale Anmeldenummer: PCT/IB2011/002697
(87) Internationale Veröffentlichungsnummer: WO 2012/073081

(56) Entgegenhaltungen:
- WO-A1-2009/132488
- CN-Y- 2 786 559
- DE-A1- 19 757 461
- DE-A1-102010 036 980

## Beschreibung

Die Erfindung bezieht sich auf den Vermessungsgerätebau und insbesondere auf Lasereinrichtungen zur Konstruktion von Ebenen. Solche Lasereinrichtungen dienen zur Durchführung von Planungsarbeiten im Bauwesen und können bei der Montage von technischen Ausrüstungen im Maschinenbau sowie in anderen wissenschaftlichen und technischen Gebieten, die die Anwendung von Lichtebenen und die Möglichkeit zur Übertragung (zur Translation) von Markierungen in horizontalen und vertikalen Ebenen voraussetzen, eingesetzt werden.

Aus dem Stand der Technik ist das Lasernivelliergerät CrossLiner 2 Pocket bekannt. Es enthält Laserstrahlungsquellen, Prismen zur Abwicklung von Ebenen anhand der Laserstrahlen und eine selbstnivellierende Hängeausgleichseinheit, die die Konstruktion der waagerechten Bezugslaserebene und der senkrechten Bezugslaserebene sicherstellt (s. Seite: http://nedo-lasers.ru/index.php?id=1-2-017).

Dieses bekannte Lasernivelliergerät ermöglicht jedoch nur die Konstruktion einer senkrechten Ebene und einer waagerechten Ebene. Es kann nicht eingesetzt werden, wenn das Schieben von Markierungen zwischen den Wänden erforderlich ist.

Der dem Anmeldungsgegenstand am nächsten kommende Stand der Technik und damit der Prototyp für den Anmeldungsgegenstand ist seinem technischen Wesen und dem erreichbaren Effekt nach ein Lasernivelliergerät mit einer selbstnivellierenden Auflageplatte mit darauf aufgestellten Laserstrahlungsquellen, mit Prismen zur Abwicklung von Ebenen aus den Laserstrahlen und mit einem Laserlot, einer Stromversorgung und einer Steuerung sowie einer Halterung zur Befestigung an einem Stativ. Die optische Achse des Laserlots verläuft dabei über den Mittelpunkt der Halterung. Alle Baugruppen sind in einem gemeinsamen Gehäuse eingebaut (s. Webseite: http://nedo-lasers.ru/index.php?id=1-2-019 - Lasernivelliergerät NEDO CrossLiner 6s).

Der Mangel dieses bekannten Lasernivelliergeräts besteht darin, dass alle komplexen, teuren Komponenten und Baugruppen miteinander fest gekoppelt sind. Sie sind in einem gemeinsamen Gehäuse eingebaut und können nicht in komplementäre (gegenseitig ergänzende) Funktionsmodule getrennt werden. Darum ist es nicht möglich, das Lasernivelliergerät je nach Anwendungszweck zu bestücken. Dabei ist das bekannte Lasernivelliergerät kompliziert aufgebaut. Folglich ergeben sich für dieses Lasernivelliergerät erhöhte Selbstkosten. Darüber hinaus hat das bekannte Lasernivelliergerät ziemlich große Abmessungen und ist schwer.

Durch WO 2009/132488 A1 ist ein Lasernivelliergerät mit einer selbstnivellierenden Auflageplatte und darauf aufgestellter Laserstrahlungsquelle bekannt. Das Lasemivelliergerät verfügt darüber hinaus über zur Erzeugung einer Laserebene geeignete optische Elemente zur Abwicklung von Ebenen aus Laserstrahlen, ebenso über ein Laserlot, eine Stromversorgung mit Steuerung und eine Halterung zur Befestigung an einem Stativ. Die optische Achse des Laserlots verläuft über das Zentrum der Halterung. Die zur Erzeugung einer Laserebene geeigneten optischen Elemente und Laserstrahlungsquellen zur Abwicklung von Ebenen aus Laserstrahlen sind in mindestens einem Strahlungsmodul zusammengefasst.

Durch CN 2 786 559 Y ist ein zusätzliches Laserlot bei einem pendelnd aufgehängten Baulaser bekannt.

Durch DE 197 57 461 A1 ist bekannt, eine selbstnivellierende Auflageplatte für Baulaser zu verwenden.

Es ist Aufgabe der Erfindung, eine benutzerfreundliche Mehrfunktionseinrichtung in Modulbauweise zu entwickeln. Die Bestückung der Einrichtung mit Modulen und die Wahl der Module sollten je nach Anwendungszweck des Lasernivelliergeräts erfolgen und keines besonderen Kraftaufwands sowie keiner besonderen Kosten bedürfen. Dies sollte die Steigerung der Nutzungseigenschaften sicherstellen.

Eine weitere Aufgabe der vorliegenden Erfindung ist die Erweiterung der Auswahl von technischen Mitteln, die die Konstruktion von einigen Ebenen und deren Anordnung zueinander sicherstellen.

Das technische Ergebnis der Erfindung ist die Aufteilung des Nivelliergeräts in wenigstens ein Strahlungsmodul und ein Halterungsmodul. Die Module werden so ausgebildet, dass sowohl verschiedene Module miteinander als auch die Strahlungsmodule untereinander koppelbar sind. Die Anzahl der Module wird durch die Gruppe der zu lösenden Aufgaben festgelegt.

Die gestellte Aufgabe wird folgendermaßen gelöst. Das bekannte Lasernivelliergerät enthält eine selbstnivellierende Auflageplatte mit darauf aufgestellten Laserstrahlungsquellen, Prismen zur Abwicklung von Ebenen aus den Laserstrahlen und einem Laserlot, eine Stromversorgung und eine Steuerung sowie eine Halterung zur Befestigung an einem Stativ. Die optische Achse des Laserlots verläuft über das Zentrum der Halterung.

Gemäß der Erfindung sind die Laserstrahlungsquellen und die Prismen zur Abwicklung der Ebenen aus den Laserstrahlen zu wenigstens einem Strahlungsmodul zusammengefasst. Das Strahlungsmodul hat ein Gehäuse, in das zusätzlich Folgendes eingebaut ist: eine Vorrichtung zur waagerechten Feineinstellung, eine zusätzliche Stromversorgung und eine Steuerung, eine zusätzliche selbstnivellierende Auflageplatte zur Aufstellung der Laserstrahlungsquellen und der Prismen zur Abwicklung der Ebene aus Laserstrahlen. Das Laserlot mit der selbstnivellierenden Auflageplatte, die Stromversorgung und die Steuerung sowie die Halterung zur Befestigung am Stativ sind zu einem Halterungsmodul zusammengefasst. Das Halterungsmodul ist mit einem Gehäuse versehen. Dabei sind das Gehäuse wenigstens eines Strahlungsmoduls und das Gehäuse des Halterungsmoduls so ausgebildet, dass das Strahlungsmodul mit dem Halterungsmodul gekoppelt werden kann und dass der Anschluss mindestens eines zusätzlichen Strahlungsmoduls möglich ist.

Die durchgeführten Recherchen in Patentschriften und in den wissenschaftlichtechnischen Informationsquellen zeugen davon, dass das Lasernivelliergerät gemäß der Erfindung nicht bekannt ist und aus dem studierten Stand der Technik nicht herausgelesen werden kann, d. h., dass das vorgeschlagene Lasernivelliergerät neu ist und auf einer erfinderischen Tätigkeit beruht.

Das Lasernivelliergerät gemäß der Erfindung kann in jedem beliebigen Betrieb hergestellt werden, der sich auf diesen Fachbereich spezialisiert hat, denn dafür sind bekannte Materialien und genormte Ausrüstungen erforderlich, die sowohl im Inland als auch im Ausland breit produziert werden.

Somit ist das Lasernivelliergerät gemäß der Erfindung gewerblich anwendbar.

In dem Gehäuse, in dem die Laserstrahlungsquellen und Prismen zur Abwicklung der Ebene aus Laserstrahlen zu mindestens einem Strahlungsmodul zusammengefasst sind, ist zusätzlich Folgendes eingebaut:
- eine Vorrichtung zur waagerechten Feineinstellung,
- eine zusätzliche Stromversorgung und eine Steuerung,
- eine zusätzliche selbstnivellierende Auflageplatte zur Aufstellung der Laserstrahlungsquellen und Prismen zur Abwicklung der Ebene aus Laserstrahlen.

Dadurch wird ein Modul hergestellt, das sowohl als selbständiges Gerät als auch als ergänzende Einheit breit verwendet werden kann. Der Einsatz als ergänzende Einheit ist sinnvoll, wenn die üblichen Lasernivelliergeräte erweitert werden müssen. Das erhöht die Nutzungseigenschaften der Lasernivelliergeräte und erweitert ihre Funktionalitäten.

Die Zusammenfassung des Laserlots mit der selbstnivellierenden Auflageplatte, mit der Stromversorgung und Steuerung sowie mit der Halterung zur Befestigung an einem Stativ im Halterungsmodul und der Einbau dieser Komponente in einem einzelnen Gehäuse ermöglichen es, ein Modul herzustellen, das als selbständige Einheit und als Zubehör im Lieferumfang der Lasernivelliergeräte verwendet werden kann. Das erhöht ebenfalls die Nutzungseigenschaften der Lasernivelliergeräte und erweitert ihre Funktionalitäten.

Das Gehäuse mindestens eines Strahlungsmoduls und das Gehäuse des Halterungsmoduls sind so ausgebildet, dass das Strahlungsmodul mit dem Halterungsmodul gekoppelt werden kann und dass der Anschluss von mindestens einem zusätzlichen Strahlungsmodul möglich ist. Eine derartige Ausbildung ermöglicht es, ohne Kraft- und Finanzaufwand das Lasernivelliergerät mit solchen Funktionsbaugruppen zu bestücken, die für bestimmte Anwendungen und Arbeiten notwendig sind. Dadurch werden die Nutzungseigenschaften der Lasernivelliergeräte beachtlich verbessert, und deren Abmessungen, Gewicht und Selbstkosten können verändert werden.

Somit ermöglicht es die Gesamtheit der wesentlichen Merkmale der Lasernivelliergeräte gemäß der Erfindung, das genannte technische Ergebnis zu erreichen, und zwar das Lasernivelliergerät in mindestens ein Strahlungsmodul und ein Halterungsmodul aufzuteilen. Die Module sind so ausgebildet, dass sowohl verschiedene Module miteinander als auch die Strahlungsmodule untereinander koppelbar sind. Die Anzahl der Module wird durch die Gruppe der zu lösenden Aufgaben festgelegt. Folglich kann die gestellte Aufgabe der Erhöhung von Nutzungseigenschaften der Lasernivelliergeräte gelöst werden.

Gemäß einer weiteren vorteilhaften Ausbildung der Erfindung sind zwei Strahlungsmodule an das Halterungsmodul ankoppelbar. Dabei können die beiden Strahlungsmodule gemäß weiteren Ausbildungen der Erfindung entweder nebeneinander oder gegenüber am Halterungsmodul liegen.

Gemäß einer weiteren vorteilhaften Ausbildung der Erfindung sind vier Strahlungsmodule gleichmäßig verteilt an das Halterungsmodul ankoppelbar.

Die Erfindung wird nun anhand von Zeichnungen näher erläutert. Es zeigen:
- Fig. 1: eine perspektivische Gesamtansicht eines Lasernivelliergeräts mit vier Strahlungsmodulen,

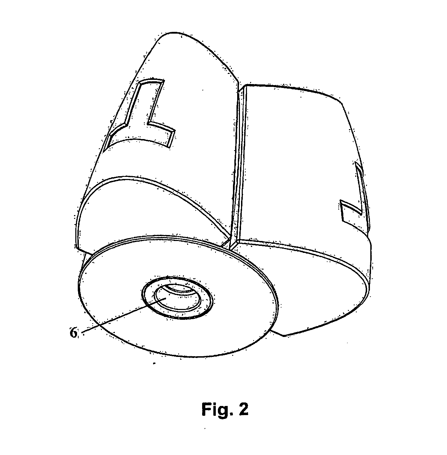

- Fig. 2: eine perspektivische Ansicht des Lasernivelliergeräts der Fig. 1 von unten,

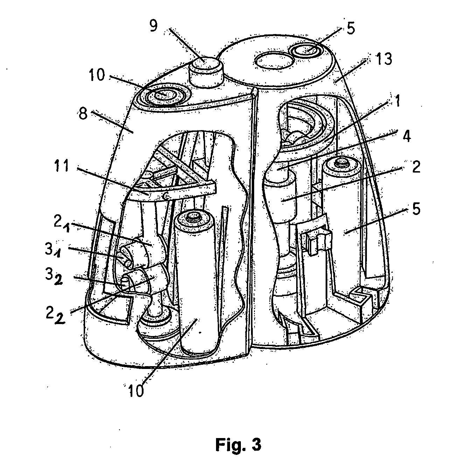

- Fig. 3: eine perspektivische Gesamtansicht des Lasernivelliergeräts der Fig. 1 mit einem Strahlungsmodul mit teilweiser Darstellung der Bauteile und Baugruppen innerhalb der Gehäuse der Module,

- Fig. 4: eine perspektivische Gesamtansicht eines Lasernivelliergeräts mit zwei Strahlungsmodulen, die nebeneinander angeordnet sind, und
- Fig. 5: eine perspektivische Gesamtansicht eines Lasernivelliergeräts mit zwei Strahlungsmodulen, die gegenüber angeordnet sind.

Das Lasernivelliergerät enthält eine Auflageplatte 1 mit einer darauf aufgestellten Laserstrahlungsquelle 2, ferner Prismen 3₁, 3₂ zur Abwicklung der Ebene aus Laserstrahlen und einem Laserlot 4, eine Stromversorgung 5 mit Steuerung und eine Halterung 6 zur Befestigung an einem nicht dargestellten Stativ. Die optische Achse des Laserlots 4 verläuft über das Zentrum der Halterung 6. Die Laserstrahlungsquellen 2₁, 2₂ und die Prismen 3₁, 3₂ zur Abwicklung der Ebene aus Laserstrahlen sind in mindestens einem Strahlungsmodul 7 zusammengefasst. Das Strahlungsmodul 7 ist mit einem Gehäuse 8 versehen, in das zusätzlich Folgendes eingebaut ist: eine Vorrichtung 9 zur waagerechten Feineinstellung, eine zusätzliche Stromversorgung 10 mit Steuerung, eine zusätzliche selbstnivellierende Auflageplatte 11 zur Aufstellung der Laserstrahlungsquellen 2₁, 2₂ und die Prismen 3₁, 3₂ zur Abwicklung der Ebene aus Laserstrahlen. Das Laserlot 4 mit der selbstnivellierender Auflageplatte 1, die Stromversorgung 5 mit Steuerung und die Halterung 6 zur Befestigung am Stativ sind in einem Halterungsmodul 12 zusammengefasst, das mit einem Gehäuse 13 versehen ist. Dabei sind das Gehäuse 8 mit mindestens einem Strahlungsmodul 7 und das Gehäuse 13 des Halterungsmoduls 12 so ausgebildet, dass das Strahlungsmodul 7 mit dem Halterungsmodul 12 koppelbar ist und dass der Anschluss von mindestens einem zusätzlichen Strahlungsmodul möglich ist.

Das Lasernivelliergerät wird folgendermaßen verwendet.

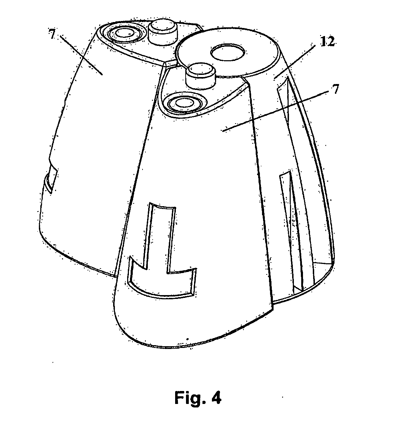

Im Betriebsmodus für Planungsarbeiten im Zusammenhang mit der orthogonalen Markierung (Setzen von Orthogonalzeichen) in senkrechten und waagerechten Ebenen wird das Lasernivelliergerät nach Fig. 4 verwendet. Das Halterungsmodul 12 wird auf dem Stativ befestigt. Zwei Strahlungsmodule 7 werden orthogonal am Halterungsmodul 12 angekoppelt. Nach dem Einschalten des Geräts werden die waagerechten Lichtebenen der Strahlungseinheiten anhand der Vorrichtung 9 zur waagerechten Feineinstellung zusammengepasst (übereinander gelegt). Danach werden die Markierungsarbeiten durchgeführt.

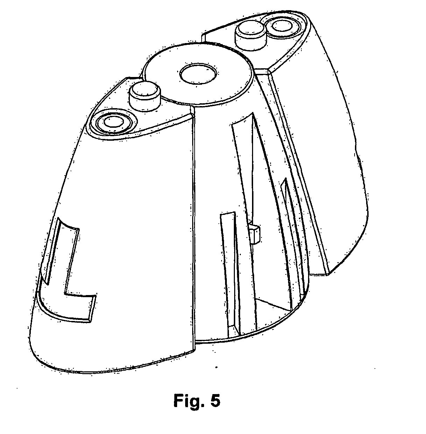

Im Betriebsmodus für Planungsarbeiten im Zusammenhang mit der Übertragung der Markierungen zwischen den gegenüberliegenden Wänden wird das Lasernivelliergerät nach Fig. 5 verwendet. Das Halterungsmodul 12 wird am Stativ befestigt. Zwei Strahlungsmodule 7 werden am Halterungsmodul gegenüberliegend befestigt. Nach dem Einschalten werden die waagerechten Lichtebenen der Strahlungsmodule 7 anhand der Vorrichtung 9 zur waagerechten Feineinstellung übereinander gelegt. Danach werden die Markierungsarbeiten durchgeführt.

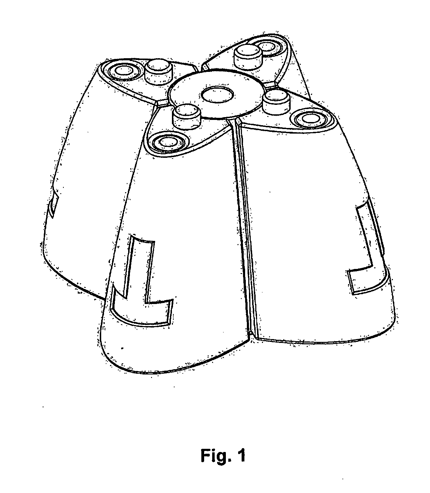

Beim Einbau von vier Strahlungsmodulen 7 am Halterungsmodul 12 nach Fig. 1 kann eine vollständige Kreisabtastung der waagerechten und der senkrechten Lichtebene erzeugt werden, die für allerlei Oberflächenmarkierungsarbeiten ausreichend ist.

Der beschriebene Aufbau des Lasernivelliergeräts ermöglicht es, sowohl Strahlungsmodule 7 als auch das Halterungsmodul 12 getrennt zu benutzen.

So reicht es zum Beispiel aus, bei der Übertragung eines Markierungspunkts vom Boden auf die Decke nur das Halterungsmodul 12 am Stativ anzubringen. In dieser Anordnung hat das Halterungsmodul 12 die Funktion des Laserlots.

Um die senkrechte Ebene und die waagerechte Ebene zu konstruieren, genügt es, nur das Strahlungsmodul 7 auf die Oberfläche zu setzen.

## Patentansprüche

1. Lasernivelliergerät mit einer selbstnivellierenden Auflageplatte (1) mit einer darauf aufgestellten Laserstrahlungsquelle (2), Prismen (3₁, 3₂) zur Abwicklung von Ebenen aus den Laserstrahlen und einem Laserlot (4), einer Stromversorgung (5) mit Steuerung und einer Halterung (6) zur Befestigung an einem Stativ, wobei die optische Achse des Laserlots (4) über das Zentrum der Halterung (6) verläuft, wobei zusätzliche Laserstrahlungsquellen (2₁, 2₂) und die Prismen (3₁, 3₂) zur Abwicklung von Ebenen aus den Laserstrahlen in mindestens einem Strahlungsmodul (7) zusammengefasst sind,
**dadurch gekennzeichnet, dass**
- das Strahlungsmodul (7) mit einem Gehäuse (8) versehen ist, in dem zusätzlich Folgendes eingebaut ist: eine Vorrichtung (9) zur waagerechten Feineinstellung, eine zusätzliche Stromversorgung (10) mit Steuerung, eine zusätzliche selbstnivellierende Auflageplatte (11) zur Aufnahme der zusätzlichen Laserstrahlungsquellen (2₁, 2₂) und der Prismen (3₁, 3₂) zur Abwicklung der Ebene aus Laserstrahlen,
- das Laserlot (4) mit der selbstnivellierenden Auflageplatte (1), mit der Stromversorgung (5) mit Steuerung und mit der Halterung (6) zur Befestigung am Stativ in einem Halterungsmodul (12) zusammengefasst sind, das mit einem Gehäuse (13) versehen ist, und
- das Gehäuse (8) des mindestens einen Strahlungsmoduls (7) und das Gehäuse (13) des Halterungsmoduls (12) derart ausgebildet sind, dass das Strahlungsmodul (7) mit dem Halterungsmodul (12) gekoppelt werden kann und der Anschluss mindestens eines zusätzlichen Strahlungsmoduls (7) möglich ist.

2. Lasernivelliergerät nach Anspruch 1,
**dadurch gekennzeichnet,**
**dass** zwei Strahlungsmodule (7) an das Halterungsmodul (12) ankoppelbar sind.

3. Lasernivelliergerät nach Anspruch 2,
**dadurch gekennzeichnet,**
**dass** die beiden Strahlungsmodule (7) nebeneinander am Halterungsmodul (12) liegen.

4. Lasernivelliergerät nach Anspruch 2,
**dadurch gekennzeichnet,**
**dass** die beiden Strahlungsmodule (7) gegenüber am Halterungsmodul (12) liegen.

5. Lasernivelliergerät nach Anspruch 1,
**dadurch gekennzeichnet,**
**dass** vier Strahlungsmodule (7) gleichmäßig verteilt an das Halterungsmodul (12) ankoppelbar sind.

## Claims

1. A laser leveling device having a self-leveling support plate (1) with a laser radiation source (2) placed thereon, prisms (3₁, 3₂) for developing planes from the laser beams, and a laser solder (4), a power supply (5) with control [or could mean "controller" but no article] and a mount (6) for securing to a stand, the optical axis of the laser solder (4) extending across the center of the mount (6), and additional laser radiation sources (2₁, 2₂) and the prisms (3₁, 3₂) being combined in at least one radiation module (7) for developing planes from the laser beams,
**characterized in that**
- the radiation module (7) is provided with a housing (8), in which the following are additionally built in: a device (9) for horizontal fine adjustment, an additional supply (10) with control [ditto], an additional self-leveling support plate (11) for receiving the additional laser radiation sources (2₁, 2₂) and the prisms (3₁, 3₂) for developing the planes from laser beams;
- the laser solder (4) with the self-leveling support plate (1), the power supply (5) with control, and the mount (6) for securing to the stand are combined in a mounting module (12), which is provided with a housing (13); and
- the housing (8) of the at least one radiation module (7) and the housing (13) of the mounting module (12) are embodied such that the radiation module (7) can be coupled to the mounting module (12), and it is possible to attach at least one additional radiation module (7).

2. The laser leveling device of claim 1,
**characterized in that**
two radiation modules (7) can be coupled to the mounting module (12).

3. The laser leveling device of claim 2,
**characterized in that**
the two radiation modules (7) are located side by side on the mounting module (12).

4. The laser leveling device of claim 2,
**characterized in that**
the two radiation modules (7) are located opposite one another on the mounting module (12).

5. The laser leveling device of claim 1,
**characterized in that**
four radiation modules (7), uniformly distributed, can be coupled to the mounting module (12).

## Revendications

1. Appareil de nivellement laser avec une plaque portante (1) autonivelante équipée d'une source de rayonnement laser (2) placée dessus, de prismes (3₁, 3₂) permettant de dérouler des plans à partir des rayons laser et d'un aplomb laser (4), d'une alimentation en courant (5) avec élément de commande et un support (6) permettant de réaliser la fixation à un trépied, l'axe optique de l'aplomb laser (4) s'étendant sur tout le centre du support (6), sachant que sont également intégrés des sources de rayonnement laser (2₁, 2₂) supplémentaires et les prismes (3₁, 3₂) permettant de dérouler des plans à partir des rayons laser dans au moins un module de rayonnement (7) ;
**caractérisé en ce que** :
- le module de rayonnement (7) est pourvu d'un carter (8) dans lequel sont en outre encastrés : un dispositif (9) de réglage de précision horizontal, une alimentation en courant (10) supplémentaire avec élément de commande, une plaque portante (11) autonivelante supplémentaire permettant de recevoir les sources de rayonnement laser (2₁, 2₂) supplémentaires et les prismes (3₁, 3₂) permettant de dérouler le plan à partir des rayons laser ;
- l'aplomb laser (4) avec la plaque portante (1) autonivelante, avec l'alimentation en courant (5) avec élément de commande et avec le support (6) permettant de réaliser la fixation au niveau du trépied sont intégrés dans un module de fixation (12) pourvu d'un carter (13) ; et
- le carter (8) de l'au moins un module de rayonnement (7) et le carter (13) du module de fixation (12) sont réalisés de telle sorte que le module de rayonnement (7) peut être couplé au module de fixation (12) et que le raccordement d'au moins un module de rayonnement (7) supplémentaire est possible.

2. Appareil de nivellement laser selon la revendication 1, **caractérisé en ce que** deux modules de rayonnement (7) peuvent être couplés au module de fixation (12).

3. Appareil de nivellement laser selon la revendication 2, **caractérisé en ce que** les deux modules de rayonnement (7) reposent côte à côte au niveau du module de fixation (12).

4. Appareil de nivellement laser selon la revendication 2, **caractérisé en ce que** les deux modules de rayonnement (7) reposent face à face au niveau du module de fixation (12).

5. Appareil de nivellement laser selon la revendication 1, **caractérisé en ce que** quatre modules de rayonnement (7) peuvent être couplés de façon à être répartis uniformément au niveau du module de fixation (12).
